# EUROPEAN PATENT APPLICATION

(11) **EP 0 743 545 A1**
(43) Date of publication of application: **20.11.1996**
(21) Application number: 95107037.4
(22) Date of filing: 10.05.1995
(51) Int. Cl.: G02C 9/00

(54) **Detachable sunglasses with magnets**

(71) Applicant: SUNREEVE COMPANY LIMITED, Sabae-shi, Fukui-ken (JP)
(72) Inventor: Nishioka, Takahiro, c/o Sunreeve Co., Ltd., Fukui-ken (JP)
(74) Representative: Twelmeier, Ulrich, Dipl.Phys.

(57) **Abstract**

Detachable sunglasses with magnets are provided, which are inexpensive, handled easily, not an obstacle when not in use, stably attached, and not incongruous when used. Detachable templeless sunglasses comprises templeless sunglasses composed of sunglasses and a frame, and eyeglasses composed of glasses and a frame, in which the sunglasses' frame and/or the eyeglasses' frame further comprise magnets to make said templeless sunglasses detachable to said eyeglasses. Furthermore, the templeless sunglasses are provided with a hinge at the bridge of their frame to make them foldable.

## Description

### BACKGROUND OF THE INVENTION

### 1. Field of the Invention

This invention relates to detachable sunglasses with magnets, which can be attached to and detached from eyeglasses frames easily, certainly and stably without damaging the surface of both frames of the sunglasses and eyeglasses when attaching and detaching.

### 2. Background Art

Generally, eyeglasses and sunglasses are different bodies, so that it is necessary to have both of them when anyone goes out. To remedy such inconvenience, various eyeglasses have been proposed including those which use dimmer lenses to automatically adjust color gradations to give a function of sunglasses, those provided with clip-on sunglasses, and those with templeless sunglasses positioned inside thereof.

However, the eyeglasses using the dimmer lenses have a disadvantage that they are very expensive. When the eyeglasses have the clip-on type sunglasses, it is troublesome to move the sunglasses up and down, and when the sunglasses are not used, they stay in an up position, making a nuisance. On the other hand, since the templeless sunglasses have their both ends simply hanged on the both temples of eyeglasses, they are not stable. Besides, the templeless sunglasses are disagreeable and incongruous because they are positioned inside of the eyeglasses. In addition, since they are not rigidly connected with each other, the contacted portions of the sunglasses and the eyeglasses are rubbed and scratched with each other when using, and are damaged.

The present invention has been completed to remedy the above disadvantages and it is an object of the present invention to provide detachable sunglasses with magnets which are inexpensive, easily handled, not an obstacle when not being used, stably fitted without any scratching, and not incongruous when used.

### SUMMARY OF THE INVENTION

According to a first aspect of the present invention, detachable sunglasses with magnets are provided, which comprise templeless sunglasses composed of sunglasses and a frame, and eyeglasses composed of glasses and a frame, and are characterized in that further comprising magnets having flat surfaces to be attached so as to make said templeless sunglasses detachable to said eyeglasses. In addition, both frames may comprise magnets to make said templeless sunglasses detachable to said eyeglasses, or one of said frames comprises magnets and the other of said frames is made of a material having a property attracted by magnetic force to make the templeless sunglasses detachable to said eyeglasses.

In addition, according to a second aspect of the present invention, detachable sunglasses with magnets are provided, wherein said magnets are provided at each end of the frame to make said templeless sunglasses detachable to said eyeglasses, or wherein said frame of the sunglasses and/or said frame of the eyeglasses themselves are formed of magnet.

Furthermore, according to another aspect of the present invention, detachable sunglasses with magnets are provided, wherein surfaces of said magnets to be attached are coated with resinous material.

Furthermore, according to further aspect of the present invention, detachable sunglasses with magnets are provided, wherein the templeless sunglasses are provided with a hinge at the bridge of the frame to make it foldable.

According to this invention, the templeless sunglasses can be magnetically and easily attached to or detached from the front of ordinary eyeglasses, provided inexpensively without using dimmer lenses, simply attached or detached, easily handled, and stably attached when used. In addition, since the surfaces of the magnets to be attached are flatly formed and covered with coating materials, they can be attached without any inconvenience of its appearance and rigidly fit. Besides, the templeless sunglasses can be used without causing an incongruous feeling, removed from the eyeglasses when not needed so as not to make a nuisance, and folded to make it convenient for carrying.

The objects and advantages of the present invention will become apparent from the detailed description to follow taken in conjunction with the appended claims.

### BRIEF DESCRIPTION OF THE DRAWINGS

Fig. 1 is a perspective view of essential portions showing one embodiment of the present invention.

Fig. 2 is a plan view of essential portions showing the templeless sunglasses attached to eyeglasses according to the present invention.

Fig. 3 is a side view of Fig. 2.

Fig. 4 is a perspective view showing how the templeless sunglasses are folded and a storage case exclusive to them.

Fig. 5 is an enlarged sectional view of the essential portions showing the templeless sunglasses attached to eyeglasses according to the present invention.

### DETAILED DESCRIPTION OF THE PREFERRED EMBODIMENTS

Embodiments of this invention will be described in detail with reference to the attached drawings.

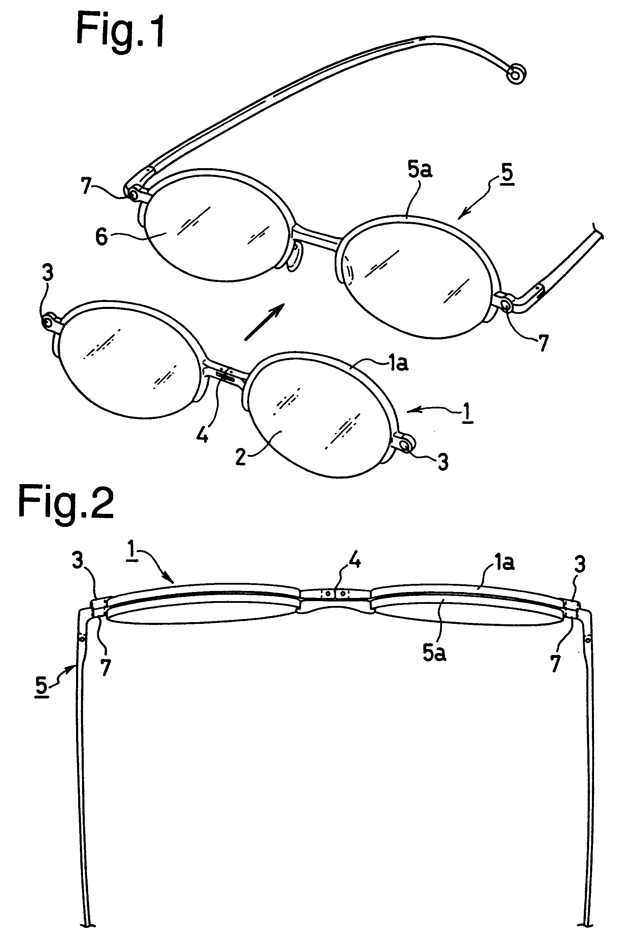

In Fig. 1, reference numeral 1 is templeless sunglasses, and colored lenses 2 are fitted to a frame 1a. And a small cylindrical magnet 3 having flat surfaces is attached to each end of the frame 1a. A hinge 4 is disposed at the bridge of the frame 1a, making it possible to fold the frame 1a at the hinge 4.

Reference numeral 5 represents a pair of eyeglasses wherein lenses 6 with a required degree are fitted to a frame 5a, and a small cylindrical magnet 7 having flat surfaces which is magnetically connected to each magnet 3 of the templeless sunglasses is attached to each end of the frame 5a. The kind of magnet employable in the present invention is not specially limited, and thus any type of magnets may be used in the present invention.

In this embodiment, the magnets are provided on each end of the frames 1a and 5a. However it is not limited to this embodiment, thus magnets can be provided on any portion if eyeglasses and sunglasses can be attached or detached stably. In addition, frame(s) itself can be formed of magnet so as to be detachable.

As a result, the templeless sunglasses 1 can be detachably attached to the front of the eyeglasses 5. Namely, as shown in Fig. 2, when the templeless sunglasses 1 are put on the front of the eyeglasses 5, the magnets 3 of the templeless sunglasses 1 are magnetically connected to the magnets 7 of the eyeglasses 5. Thus, the eyeglasses 5 can be used as eyeglasses provided with sunglasses.

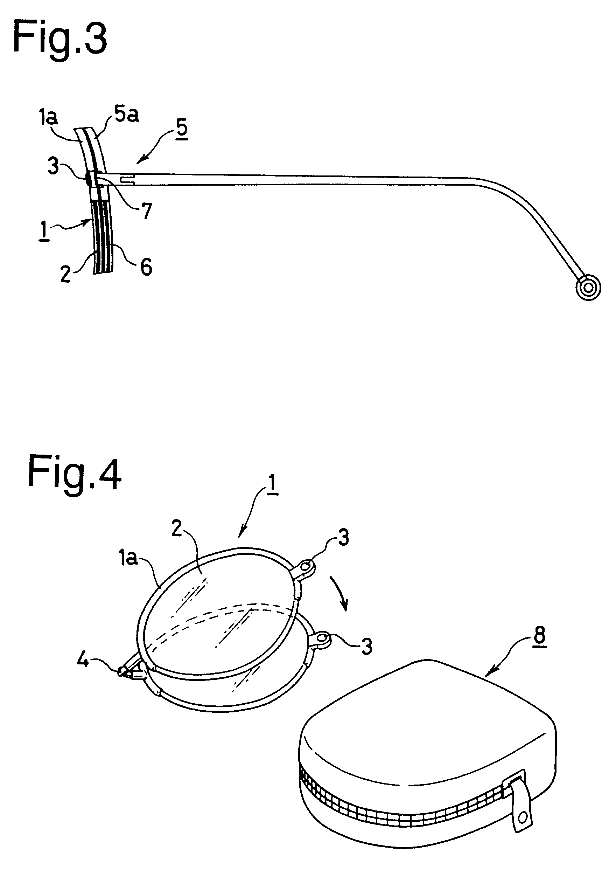

In this case, as shown in Fig. 3, when the templeless sunglasses 1 and the eyeglasses 5 are previously designed to have the same size so that they fit perfectly, their appearances are remarkable. And it is preferable to previously make positioning so that the magnets 3 of the templeless sunglasses 1 perfectly fit to the magnets 7 of the eyeglasses 5.

When the frame 5a of the eyeglasses 5 is made of a material which has a property attracted by magnetic force, the frame 5a of the eyeglasses 5 is not required to have magnets because the magnets 3 of the templeless sunglasses 1 can be magnetically connected to the frame 5a. And, when the frame 1a of the templeless sunglasses 1 is made of such a material having a property attracted by magnetic force, the templeless sunglasses 1 do not need to have magnets and only the eyeglasses comprise magnets 7 because the magnets 7 of the eyeglasses 5 can be magnetically connected to the frame 1a. In other words, it is sufficient by disposing the magnets on either of one of the frames of the templeless sunglasses 1 or the eyeglasses 5 when the other frame is made of such a material having a property attracted by magnetic force. In the present invention, any kinds of material having a property attracted by magnetic force may be used.

Besides, even when the eyeglasses and the templeless sunglasses have a synthetic resin frame, this invention can be applied by attaching the magnets to both of them as in the above embodiment or by preparing the frame with a plastic magnet material.

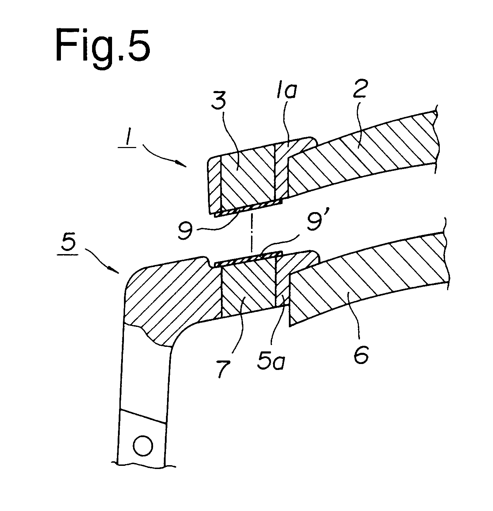

The used magnets should be rigidly, stably and flatly provided to the frame. If they are not so provided, the frames are not stably connected and thus damaged. In addition, because of unstableness, the surfaces of the frames are scratched. In general, the surface of the employed magnet is nickel plated for improving its appearance. If any scratching occurs, the magnet itself may get rusty and its appearance gets worse. For solving this problem, when providing the magnets, it is preferable to provide flat coatings 9,9' on the surfaces to be attached or detached as shown in Fig. 5. Examples of the coatings employable for the present invention are epoxide type resin, polyester type resin, polyurethane type resin, phenol type resin and resorcinol type resin. Most preferable one is epoxide type resin. Coatings may be provided on at least one of the surface of the eyeglasses' frame or the sunglasses' frame, however it is preferable to coat both surfaces of them with coating material. According to this coatings, the magnets can be rigidly, stably and flatly provided and the frame of the sunglasses can be integrally and stably fit to the frame of the eyeglasses without any scratching and damaging.

When sunglasses are not needed, the templeless sunglasses 1 can be removed from the eyeglasses 5. In this case, the templeless sunglasses 1 can be removed without using any tool because they are magnetically connected to the eyeglasses 5. As shown in Fig. 4, the removed templeless sunglasses 1 can be folded double at the hinge 4 of the bridge of the frame 1a. And, the magnets 3 at the both ends are magnetically connected to each other to lock and to prevent the templeless sunglasses 1 from opening unexpectedly. Therefore, it is convenient to carry them in a pocket or a handbag, and they can also be suitably carried in a dedicated storage case 8.

Removal of the templeless sunglasses 1 reveals the magnets 7 of the eyeglasses 5, but appropriate coloring of the magnets 7 provides a design function as a dandyish mark. And it is also possible to attach a small metallic accessory such as a chain to make the appearances fashionable.

As described above, according to the present invention, when sunglasses are needed, the templeless sunglasses can be magnetically attached to the front of an eyeglasses frame, and when the sunglasses are not needed, the templeless sunglasses can be easily removed. The removed templeless sunglasses are conveniently carried because they can be folded at the bridge.

Thus, according to the present invention, the templeless sunglasses can be magnetically and easily attached to or detached from the front of ordinary eyeglasses, provided inexpensively without using dimmer lenses, simply attached or detached, easily handled, and stably attached when used without any scratching and damaging. In addition, since the surfaces of the magnets to be attached are flatly formed and covered with coating materials, they can be attached without any inconvenience of its appearance and rigidly fit. Besides, the templeless sunglasses can be used without causing an incongruous feeling, removed from the eyeglasses when not needed so as not to make a nuisance, and folded to make it convenient for carrying.

## Claims

1. Detachable sunglasses with magnets comprising templeless sunglasses composed of sunglasses and a frame, and eyeglasses composed of glasses and a frame, characterized in that further comprising magnets having flat surfaces to be attached so as to make said templeless sunglasses detachable to said eyeglasses.

2. Detachable sunglasses with magnets according to claim 1, wherein both frames comprise magnets to make said templeless sunglasses detachable to said eyeglasses.

3. Detachable sunglasses with magnets according to claim 1, wherein one of said frames comprises magnets and the other of said frames is made of a material having a property attracted by magnetic force to make the templeless sunglasses detachable to said eyeglasses.

4. Detachable sunglasses with magnets according to one of claims 1 to 3, wherein said magnets are provided at each end of the frame to make said templeless sunglasses detachable to said eyeglasses.

5. Detachable sunglasses with magnets according to one of claims 1 to 4, wherein said magnets are cylindrical magnets having flat surfaces to be attached.

6. Detachable sunglasses with magnets according to one of claims 1 to 3, wherein said frame of the sunglasses and/or said frame of the eyeglasses themselves are formed of magnet.

7. Detachable sunglasses with magnets according to one of claims 1 to 6, wherein surfaces of said magnets to be attached are coated with resinous material.

8. Detachable sunglasses with magnets according to claim 7, wherein said resinous material is one selected from the group consisting of epoxide type resin, polyester type resin, polyurethane type resin, phenol type resin and resorcinol type resin.

9. Detachable sunglasses with magnets according to claim 8, wherein said resinous material is epoxide type resin.

10. Detachable sunglasses with magnets according to any one of claims 1 to 9, wherein the templeless sunglasses are provided with a hinge at the bridge of the frame to make it foldable.

11. Detachable sunglasses with magnets according to claim 10, wherein the magnets can be attached with each other so that the templeless sunglasses are rigidly folded by the magnets.
